# EUROPEAN PATENT APPLICATION

(11) **EP 4 257 227 A1**
(43) Date of publication of application: **11.10.2023**
(21) Application number: 22305438.8
(22) Date of filing: 04.04.2022
(51) Int. Cl.: B01D 59/08, B01D 9/00, C01B 6/04, C01B 3/00

(54) **DEVICE AND METHOD FOR EXTRACTION OF LITHIUM HYDRIDES**

(71) Applicant: Renaissance Fusion, 38600 Fontaine (FR)
(72) Inventor: VOLPE, Francesco, 38600 Fontaine (FR)
(74) Representative: Cabinet Beaumont

(57) **Abstract**

The present disclosure relates to a method for separating lithium from a lithium mixture, the method comprising:
- providing a first mixture (104) comprising lithium, lithium hydride, and at least a first compound among lithium deuteride and lithium tritide, the first mixture being at a first temperature;
- a first stirring step (108) adapted to stirring the first mixture;
- a first cooling step (110) adapted to cooling, preferably uniformly, the first mixture to a second temperature lower than the first temperature; the first stirring and cooling steps being adapted to deposit at least part of the first compound; and
- a first separation step (116) adapted to separating at least the deposited first compound from the first mixture, forming a second mixture (118) comprising at least lithium and lithium hydride.

## Description

### Technical field

The present disclosure is related to devices and methods for separating lithium hydrides in a liquid mixture, particularly it is related to separation of lithium hydride, lithium deuteride and lithium tritide in a mixture that contains lithium.

### Background art

The world currently depends heavily on fossil fuels, this dependency creates severe effects on climate, warming and biosphere degradation. The only alternative known to man is nuclear power, and the only one capable of achieving the appropriate safety and fuel efficiency is fusion power.

The prospect of fusion power brings along the problem of tritium breeding. Indeed, the most efficient fusion reaction is deuterium-tritium, which needs a 50-50% mixture of deuterium and tritium. Therefore, tritium represents half of the most efficient fusion reaction, and is also a very scarce isotope of hydrogen. It is calculated that there are about 20kg of tritium occurring naturally, so in order to be used as a fuel, tritium must be artificially generated. Currently the price of a gram of tritium is about 30,000 dollars.

The current methods for production of tritium in fusion reactors involve collecting it back from a lithium blanket or breeder. As part of the fusion reaction process neutrons are expelled, lithium is then made to react with the neutrons and produce tritium. The lithium blanket may be constructed of solid lithium or of liquid lithium.

After the lithium blanket is bombarded by neutrons, the reaction products remain in the blanket. As the products are in the blanket, they need to be extracted. For liquid blankets this supposes an additional problem. Neutron bombardment of lithium produces many products either from the initial reaction or from subsequent reactions, most of these products are helium and tritium. Further, the environment in which these products are formed promotes subsequent reactions of tritium with lithium. This can lead to the formation of lithium tritide, LiT, and, added to the exposure of lithium to a deuterium-tritium plasma, this can also lead to the formation of lithium deuteride, LiD. These compounds appear alongside pure lithium and other impurities in the liquid blanket, and for tritium to be extracted and reused, they must be separated. Another compound, lithium hydride, LiH, while not forming spontaneously, neither to exposure of neutrons nor to exposure to deuterium-tritium plasma, can be added to the liquid blanket to facilitate said separation. The following ionic compounds may all be named "lithium hydrides": lithium hydride, LiH, lithium deuteride, LiD, and lithium tritide, LiT.

Presently, the industry faces this problem using methods that have several limitations. The prior art teaches the Maroni process which uses high-temperature molten mixed alkali metal halide salts, LiCl:LiF:LiBr as an extraction solvent. The process is known to develop impurities like liquid and gaseous acids such as HCl, HF and HBr in the salt phase, therefore these solvents are very corrosive and volatile.

One of these methods is described in US 10,450,600 to Garcia-Diaz et. al. In this document, an electrochemical cell is utilized to follow a method that recovers tritium from a molten lithium metal solution. This method has a number of limitations that prevent it from being used in certain applications, for instance as part of the operation of a fusion power plant. The first one being that the lithium mixture must be treated with electrolytes, so the composition of the mixture needs to be altered, to add said electrolytes. Therefore, an additional step in which the electrolytes are added to the mixture must be added to the already time constrained process of a working power plant. A second limitation of this method involves the electrochemical cell device. The mixture must be deposited on the cell and then enough time for the electrochemical separation process must occur. For certain applications, including an electrochemical cell capable of holding the mixture at its operation temperatures is prohibitive. Further, time considerations may require that the separation process be done faster, and it is not readily apparent how to increase the separation speed in the method as described using the electrochemical cell discussed in the document. A final limitation that is apparent of this system is that it preferably produces tritium gas as one of the separation products. This is a strict limitation as tritium would have to be converted to another state in order to be used in certain applications, thus adding more to the time requirements.

Other methods involve different solvents. A method as such is described in the PCT application WO2013/166505 by Farmer. In the document by Farmer, molten lithium compounds including LiOH and Li₂CO₃ can be used as a solvent for extracting lithium tritide from the molten lithium metal. In particular, using LiOH avoids the generation of HF. Yet, the method described by Farmer also includes subjecting the extracted LiT solution to electrolysis in an electrochemical cell and does not overcome this limitation in the prior art.

Thus, there is still a need for a method that separates lithium from the ionic compounds lithium tritide, and, if present, lithium hydride and/or lithium deuteride, for application in the emerging fusion industry. A method that does not require a solvent or an important stage like an electrochemical cell. A reliable method or device that can separate these components from a mixture would largely reduce costs and help make energy production from fusion reactions a cost-efficient endeavor.

### Summary of Invention

One embodiment addresses all or some of the drawbacks of known methods for separating lithium from a liquid that contains lithium.

One embodiment provides a method for separating lithium from a lithium mixture, the method comprising:
- providing a first mixture comprising lithium, lithium hydride, and at least a first compound among lithium deuteride and lithium tritide, the first mixture being at a first temperature;
- a first stirring step adapted to stirring the first mixture;
- a first cooling step adapted to cooling, preferably uniformly, the first mixture to a second temperature lower than the first temperature; the first stirring and cooling steps being adapted to deposit at least part of the first compound; and
- a first separation step adapted to separating at least the deposited first compound from the first mixture, forming a second mixture comprising at least lithium and lithium hydride or a fifth mixture comprising at least lithium.

In one embodiment, the first compound is lithium tritide, the first temperature is above 691°C and the second temperature is comprised between 689°C and 691°C, for example equal to about 690°C, the first separation step forming the second mixture.

In one embodiment, the first stirring and cooling steps are adapted to deposit at least part of the first compound, and at least part of lithium hydride, the first separation step forming the fifth mixture.

In one embodiment, the first compound is lithium tritide, the first mixture further comprises lithium deuteride as a second compound, and the first stirring and cooling steps are adapted to deposit at least part of lithium deuteride and lithium tritide, and at least part of lithium hydride, the first separation step forming the fifth mixture.

In one embodiment, the first temperature is above 691°C, and the second temperature is comprised between 687 and 689°C, for example equal to about 688°C.

In one embodiment, the method further comprises a first extraction step adapted to extracting the deposited compound(s), after or during the first separation step.

In one embodiment, the method comprises repeating the first stirring, cooling and separating steps, and in some cases, the first extraction step.

In one embodiment, the first mixture comprises a second compound among lithium deuteride and lithium tritide, different from the first compound, and the method further comprises:
- a second stirring step adapted to stirring the second mixture;
- a second cooling step adapted to cooling, preferably uniformly, the second mixture to a third temperature lower than the second temperature; the second stirring and cooling steps being adapted to deposit at least part of the second compound; and
- a second separation step adapted to separating the deposited second compound from the second mixture, forming a third mixture comprising at least lithium and lithium hydride.

In one embodiment, the method further comprises a second extraction step adapted to extracting the second compound, after or during the second separation step.

In one embodiment, the second compound is lithium deuteride, and the third temperature is comprised between 687 and 689°C, for example equal to about 688°C.

In one embodiment, the method comprises repeating the second stirring, cooling and separating steps, and in some cases, the second extraction step.

In one embodiment, the method further comprises:
- a third stirring step adapted to stirring the third mixture;
- a third cooling step adapted to cooling, preferably uniformly, the third mixture to a fourth temperature lower than the third temperature; the third stirring and cooling steps being adapted to deposit at least part of lithium hydride; and
- a third separation step adapted to separating the deposited lithium hydride from the third mixture, forming a fourth mixture comprising at least lithium.

In one embodiment, the method further comprises a third extraction step adapted to extracting lithium hydride, after or during the third separation step.

In one embodiment, the fourth temperature is comprised between 685 and 687°C, for example equal to about 686°C.

In one embodiment, the method comprises repeating the third stirring, cooling and separating steps, and in some cases, the third extraction step.

In one embodiment, the method further comprises a neutron bombardment and/or plasma exposure step applied to the second mixture, the third mixture, the fourth mixture, and/or the fifth mixture, for example to recreate a mixture similar to the first mixture.

In one embodiment, providing the first mixture comprises a heating step adapted to heating the first mixture to the first temperature.

In one embodiment, the first mixture is in a liquid or molten form.

One embodiment provides a device adapted to implement the method according to an embodiment, wherein the device comprises:
- a container adapted to contain a mixture comprising lithium, lithium hydride and at least one compound among lithium deuteride and/or lithium tritide;
- a stirrer adapted to stirring the mixture in the container;
- a cooling mechanism adapted to cooling the mixture in the container.

### Brief description of drawings

The foregoing features and advantages, as well as others, will be described in detail in the following description of specific embodiments given by way of illustration and not limitation with reference to the accompanying drawings, in which:
FIG. 1A is a diagram of an embodiment of a method for extraction of lithium hydrides.
FIG. 1B is a diagram of another embodiment of a method for extraction of lithium hydrides.
FIG. 2 is a frontal view of a device that executes the method for extraction of lithium hydrides.
FIG. 3 is a phase diagram of the LiH mixture according to mole percentage.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures

Unless specified otherwise, the expressions "around", "approximately", "substantially" and "in the order of" signify within 10 %, and preferably within 5 %.

The figures are not to scale. It should be noted that the drawings refer to an embodiment of the disclosed method and device for extraction of lithium hydrides, sometimes also referred simply as device or method, accordingly. Other embodiments may be possible, as someone with appropriate training may readily appreciate. The actual dimension and/or shape of each of the components of the embodiment may vary. Only important details of the embodiment are shown, however one of ordinary skill in the art can appreciate how the overall device may be constructed, without undue experimentation. Similarly, a person of ordinary skill may anticipate that steps of the method may be executed in a different order, according to the specific needs of the use. Some details have been omitted from the drawings, but the inventors believe that adding these details is unnecessary for the overall appreciation of the characteristics of the invention disclosed. These omitted details include, among others, elements for holding or fixing the device or its functional components. Some characteristics of the embodiment appear exaggerated to facilitate understanding. The embodiments disclosed, and alternatives observed should not be considered as limiting the invention in any way.

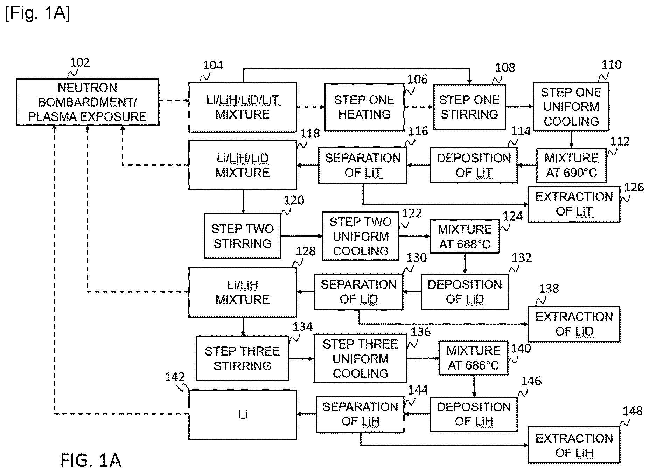

A diagram of an embodiment of a method for extraction of lithium hydrides is shown in FIG. 1A. It may be possible to start the process at any step or follow a different sequence in order to achieve the same results.

The method may be started with a liquid or molten Li/LiH/LiD/LiT mixture **104** (first mixture), which may be then heated to a first temperature in a first heating step or step one heating **106** and is then stirred in a step one stirring **108.** Then the mixture is uniformly cooled in a step one uniform cooling **110,** until the mixture reaches a second temperature which may be about 690°C, described as the mixture at 690°C **112** step in the diagram of FIG. 1A. At this point deposition of LiT occurs in the deposition of LiT **114** step. After LiT deposits, a next step is the separation of LiT from the rest of the mixture in the separation of LiT **116** step. At this point in the method, LiT may be extracted in an extraction of LiT **126** step. Once LiT is extracted, the remain mixture in the liquid phase is a Li/LiH/LiD mixture **118** (second mixture). The mixture with these components is now subjected to a step two stirring **120,** and then to step two uniform cooling **122,** until the mixture reaches a third temperature which may be about 688°C, this step is described in the diagram as mixture at 688°C **124.** With the mixture at this temperature, deposition of LiD occurs in a deposition of LiD **132** step. Once deposition ends, LiD starts to separate in a separation of LiD **130** step. As separation of LiD from the molten mixture terminates, LiD may be extracted from the mixture in an extraction of LiD **138** step. Once LiD is extracted the remaining mixture is a Li/LiH mixture **128** (third mixture). At this point, the Li/LiH mixture may once again be stirred in a step three stirring **134** and once again it is cooled in a step three uniform cooling **136,** until the mixture reaches a fourth temperature which may be 686°C, this step is described in the diagram as mixture at 686°C **140.** At this temperature, LiH starts to deposit in a deposition of LiH **146** step. Once deposition terminates, it is now possible to separate LiH in a separation of LiH **144** step. As LiH finishes separating, it may now be extracted from the mixture in an extraction of LiH step **148.** At this point, the mixture is comprised solely or mainly of molten Li **142** (fourth mixture).

Any of the Li/LiH/LiD **118,** Li/LiH **128** or Li **142** mixtures may be subjected to deuterium-tritium plasma exposure and/or neutron bombardment **102** in order to recreate the Li/LiH/LiD/LiT mixture **104.** The method may then be restarted.

It should be noticed that it is possible that some steps may occur concurrently, for example the stirring steps, step one stirring **108,** step two stirring **120** or step three stirring **134** may occur during the accompanying cooling step, step one uniform cooling **110,** step two uniform cooling **122** or step three uniform cooling **136,** respectively.

When reference is made to a uniform cooling (or uniformly cooled), this is directed to a cooling which is substantially uniform in the whole volume of the mixture.

When reference is made to a LiT, LiD, LiH, or Li compound, this means that the compound contains mainly, or is rich of, respectively LiT, LiD, LiH, or Li, in other words that the compound is not necessarily pure LiT, LiD, LiH, or Li. Similarly, a Li/LiH/LiD mixture may contain residual traces of LiT, and a Li/LiH mixture may contain residual traces of LiT and/or LiD. The same applies for other mixtures of lithium and/or lithium ionic compounds.

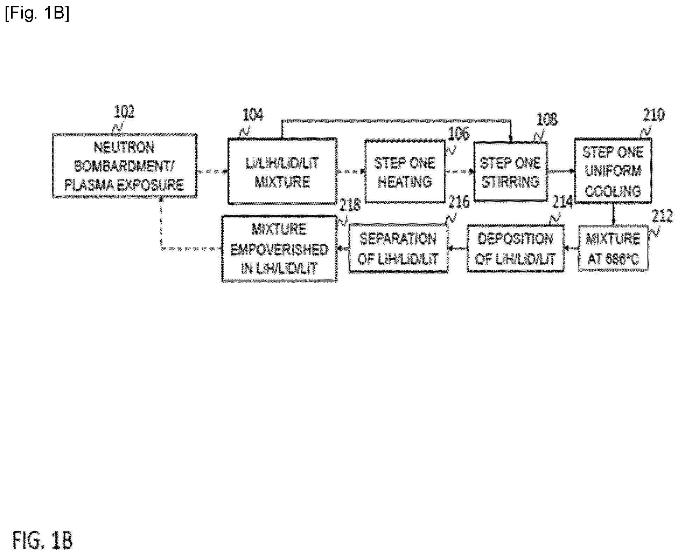

A diagram of another embodiment of a method for extraction of lithium hydrides is shown in FIG. 1B, in which a collective precipitation of LiH and/or LiD and/or LiT is made, by cooling the Li/LiH/LiD/LiT mixture to for example 686°C.

Similarly to the method of FIG. 1A, the method of FIG. 1B may be started with a liquid or molten Li/LiH/LiD/LiT mixture **104** (first mixture), which may be then heated in a first heating step or step one heating **106** and is then stirred in a step one stirring **108.**

Then, the mixture is uniformly cooled in a step one uniform cooling **210,** until the mixture reaches a first temperature which may be 686°C, described as the mixture at 686°C **212** in the diagram of FIG. 1B.

At this point deposition of LiH/LiD/LiT occurs in the deposition of LiH/LiD/LiT **214** step. After LiH/LiD/LiT deposits, a next step is the separation of LiH/LiD/LiT from the rest of the mixture in the separation of LiH/LiD/LiT **216** step. At this point in the method, LiH/LiD/LiT may be extracted. Once LiH/LiD/LiT is extracted the remain mixture in the liquid phase is a mixture **218** impoverished in Li/LiH/LiD (fifth mixture).

The mixture **218** impoverished in Li/LiH/LiD may be subjected to deuterium-tritium plasma exposure and/or neutron bombardment **102** in order to recreate the Li/LiH/LiD/LiT mixture **104.** The method may then be restarted.

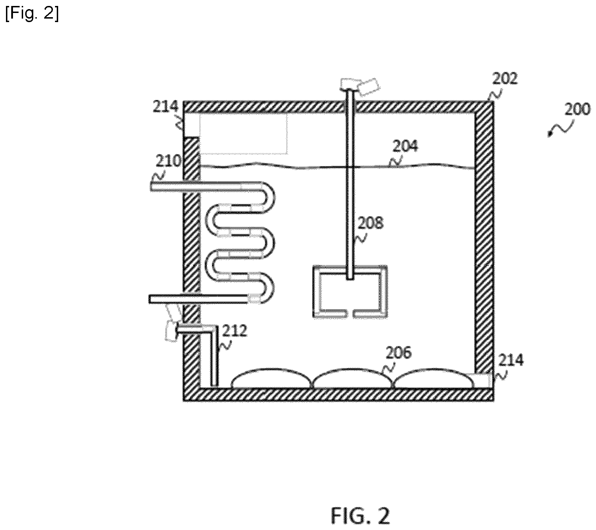

An embodiment of a device **200** that executes this method is shown in FIG. 2. In this first embodiment, it is comprised of a mechanism for revolving a mixture **204** which may be a stirrer **208,** a mechanism for removing muds **206** which may be described as a paddle **212,** a mechanism for heating or cooling which may be a serpentine **210,** through which hot or cold water or another fluid may be used to heat or cool the mixture **204.** This is all sustained in a container **202** which may be insulated, the container **202** has holes **214** (apertures) for taking in and removing the mixture **204.** It should be noted that the composition of the mixture **204** may be any of the Li/LiH/LiD/LiT **104,** Li/LiH/LiD **118,** Li/LiH **128,** Li **142** mixtures from the diagram in FIG. 1A or mixture **218** impoverished in Li/LiH/LiD from the diagram in FIG. 1B. The muds **206** may be comprised of the products of any of the separation or deposition steps and effectively realize the extraction of LiT **126,** extraction of LiD **138** or extraction of LiH **148.**

### Example of operation

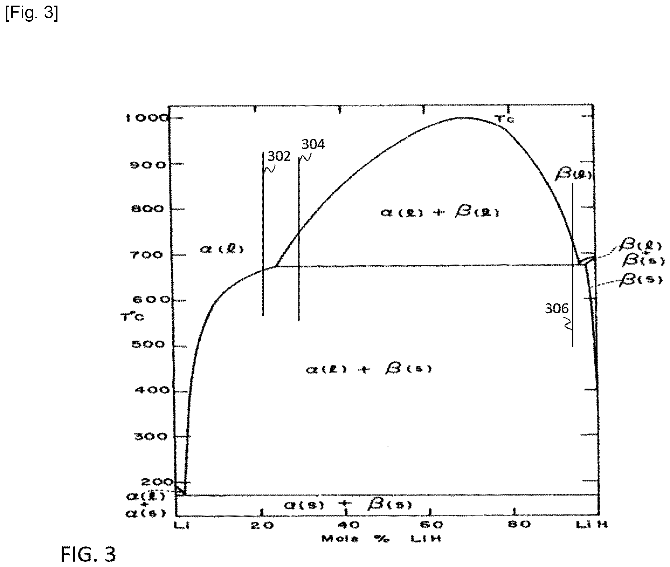

An illustration of operation of the described embodiments of the device may be done according to the trajectory lines shown in FIG. 3. Further, the method described in FIG. 1A or FIG. 1B may also be executed in accordance with this trajectory lines. The first trajectory line **302** occurs at about 20% molar component in the LiH mixture, above 690°C the LiH mixture is in the alfa, liquid phase. Following the trajectory line **302,** if the LiH mixture is cooled, it enters two phases: an alfa liquid phase and a beta solid phase. A second trajectory line **304** with a mole percentage of about 30% may also be used. In this third trajectory line **304,** at above 750°C, the mixture is in the alfa, liquid phase. As the mixture is cooled following the trajectory line **304,** and the mixture is below 750°C and above 690°C the liquid mixture separates in two distinctive liquid phases: alfa and beta. If cooling is then continued below 690°C, the beta liquid phase solidifies. A third trajectory **306,** when the molar percentage may be at around 90%, starts with the beta liquid phase at above 750°C. Following the third trajectory **306,** if the mixture is cooled below 750°C but above 690°C, the alfa and beta liquid phases separate. Further, if the mixture is cooled below 690°C the beta phase once again solidifies. It is the beta solid phase that may be removed and taken as the mud **206** from FIG. 2. It should be understood that the actual molar component of the LiH mixture may be different than the ones described here, and the actual temperatures at which the changes occur may also be distinctive from the ones mentioned here. Yet, it should be apparent to anyone of ordinary skill in the art that the phase separation achieves the same result despite the different conditions.

The device shown in FIG. 2 executes each step of the method shown in the diagram from FIG. 1A or FIG. 1B. The serpentine **210** may be used for step one heating **106** or any of the cooling steps: step one uniform cooling **110, 210,** step two uniform cooling **122** or step three uniform cooling **136.** The stirrer **208** may be used for the stirring steps: step one stirring **108,** step two stirring **120** or step three stirring **134.** Further, the paddle **212** may be used to remove the muds **206,** these are the products of the separation and deposition steps. Extraction is executed by the paddle **212,** which removes the muds **206** through one of the holes **214** of the container, this may be achieved by pushing.

Example embodiments of the invention are summarized here. Other embodiments can also be understood from the entirety of the specification as well as the claims filed herein.

Example 1. A method for separating lithium from a lithium mixture, the method comprising:
- providing a first mixture (104) comprising lithium, lithium hydride, and at least a first compound among lithium deuteride and lithium tritide, the first mixture being at a first temperature;
- a first stirring step (108) adapted to stirring the first mixture;
- a first cooling step (110; 210) adapted to cooling, preferably uniformly, the first mixture to a second temperature lower than the first temperature; the first stirring and cooling steps being adapted to deposit at least part of the first compound; and
- a first separation step (116; 216) adapted to separating at least the deposited first compound from the first mixture, forming a second mixture (118) comprising at least lithium and lithium hydride or a fifth mixture (218) comprising at least lithium.

Example 2. The method according to example 1, wherein the first compound is lithium tritide, the first temperature is above 691°C and the second temperature is comprised between 689°C and 691°C, for example equal to about 690°C, the first separation step (116) forming the second mixture (118).

Example 3. The method according to example 1, wherein the first stirring (108) and cooling (210) steps are adapted to deposit at least part of the first compound, and at least part of lithium hydride, the first separation step (116) forming the fifth mixture (218).

Example 4. The method according to example 1, wherein the first compound is lithium tritide and the first mixture (104) further comprises lithium deuteride as a second compound, and the first stirring (108) and cooling (210) steps are adapted to deposit at least part of lithium deuteride and lithium tritide, and at least part of lithium hydride to form a fifth mixture (218).

Example 5. The method according to example 3 or 4, wherein the first temperature is above 691°C, and the second temperature is comprised between 687 and 689°C, for example equal to about 688°C.

Example 6. The method according to any one of examples 1 to 5, further comprising a first extraction step (126) adapted to extracting the deposited compound(s), after or during the first separation step.

Example 7. The method according to any one of examples 1 to 6, comprising repeating the first stirring, cooling and separating steps, and in some cases, the first extraction step.

Example 8. The method according to any one of examples 1, 2, 6, 7, wherein the first mixture (104) comprises a second compound among lithium deuteride and lithium tritide, different from the first compound, the method further comprising:
- a second stirring step (120) adapted to stirring the second mixture;
- a second cooling step (122) adapted to cooling, preferably uniformly, the second mixture to a third temperature lower than the second temperature; the second stirring and cooling steps being adapted to deposit at least part of the second compound; and
- a second separation step (130) adapted to separating the deposited second compound from the second mixture, forming a third mixture (128) comprising at least lithium and lithium hydride.

Example 9. The method according to example 8, further comprising a second extraction step (138) adapted to extracting the second compound, after or during the second separation step (130).

Example 10. The method according to example 8 or 9, wherein the second compound is lithium deuteride, and the third temperature is comprised between 687 and 689°C, for example equal to about 688°C.

Example 11. The method according to any one of examples 8 to 10, comprising repeating the second stirring, cooling and separating steps, and in some cases, the second extraction step.

Example 12. The method according to any one of examples 8 to 11, wherein the method further comprises:
- a third stirring step (134) adapted to stirring the third mixture (128);
- a third cooling step (136) adapted to cooling, preferably uniformly, the third mixture to a fourth temperature lower than the third temperature; the third stirring and cooling steps being adapted to deposit at least part of lithium hydride; and
- a third separation step (144) adapted to separating the deposited lithium hydride from the third mixture, forming a fourth mixture (142) comprising at least lithium.

Example 13. The method according to example 12, further comprising a third extraction step (148) adapted to extracting lithium hydride, after or during the third separation step (144).

Example 14. The method according to example 12 or 13, wherein the fourth temperature is comprised between 685 and 687°C, for example equal to about 686°C.

Example 15. The method according to any one of examples 12 to 14, comprising repeating the third stirring, cooling and separating steps, and in some cases, the third extraction step.

Example 16. The method according to any one of examples 1 to 15, further comprising a neutron bombardment and/or plasma exposure step (102) applied to the second mixture (118), the third mixture (128), the fourth mixture (142), and/or the fifth mixture (218), for example to recreate a mixture similar to the first mixture (104).

Example 17. The method according to any one of examples 1 to 16, wherein providing the first mixture (104) comprises a heating step (106) adapted to heating the first mixture to the first temperature.

Example 18. The method according to any one of examples 1 to 17, wherein the first mixture (104) is in a liquid or molten form.

Example 19. A device adapted to implement the method of any of examples 1 to 18, wherein the device comprises:
- a container (202) adapted to contain a mixture (204) comprising lithium, lithium hydride and at least one compound among lithium deuteride and/or lithium tritide;
- a stirrer (208) adapted to stirring the mixture in the container;
- a cooling mechanism (210) adapted to cooling the mixture in the container.

Example 20. The device according to example 19, wherein the cooling mechanism (210) is also adapted to heating the mixture (204), for example the cooling mechanism comprises a serpentine.

Example 21. The device according to example 19 or 20, wherein the container comprises at least one aperture (214) adapted to taking in and out at least part of the mixture.

Example 22. The device according to any one of examples 19 to 21, further comprising a removing mechanism (212) adapted to removing at least part of the mixture out of the container.

Various embodiments and variants have been described. Those skilled in the art will understand that certain features of these embodiments can be combined and other variants will readily occur to those skilled in the art.

Finally, the practical implementation of the embodiments and variants described herein is within the capabilities of those skilled in the art based on the functional description provided hereinabove.

List of acronyms:
- LiH:: Lithium hydride
- LiD:: Lithium deuteride
- LiT:: Lithium tritide
- LiCl:: Lithium chloride
- LiF:: Lithium fluoride
- LiBr:: Lithium bromide
- HCl:: Hydrochloric acid
- HF:: Hydrofluoric acid
- HBr:: Hydrobromic acid
- LiOH:: Lithium hydroxide
- Li₂CO₃:: Lithium carbonate
- Li:: Lithium

## Claims

1. A method for separating lithium from a lithium mixture, the method comprising:
- providing a first mixture (104) comprising lithium, lithium hydride, and at least a first compound among lithium deuteride and lithium tritide, the first mixture being at a first temperature;
- a first stirring step (108) adapted to stirring the first mixture;
- a first cooling step (110; 210) adapted to cooling, preferably uniformly, the first mixture to a second temperature lower than the first temperature; the first stirring and cooling steps being adapted to deposit at least part of the first compound; and
- a first separation step (116; 216) adapted to separating at least the deposited first compound from the first mixture, forming a second mixture (118) comprising at least lithium and lithium hydride or a fifth mixture (218) comprising at least lithium.

2. The method according to claim 1, wherein the first compound is lithium tritide, the first temperature is above 691°C and the second temperature is comprised between 689°C and 691°C, for example equal to about 690°C, the first separation step (116) forming the second mixture (118).

3. The method according to claim 1, wherein the first stirring (108) and cooling (210) steps are adapted to deposit at least part of the first compound, and at least part of lithium hydride, the first separation step (116) forming the fifth mixture (218).

4. The method according to claim 1, wherein the first compound is lithium tritide and the first mixture (104) further comprises lithium deuteride as a second compound, and the first stirring (108) and cooling (210) steps are adapted to deposit at least part of lithium deuteride and lithium tritide, and at least part of lithium hydride to form a fifth mixture (218).

5. The method according to claim 3 or 4, wherein the first temperature is above 691°C, and the second temperature is comprised between 687 and 689°C, for example equal to about 688°C.

6. The method according to any one of claims 1 to 5, further comprising a first extraction step (126) adapted to extracting the deposited compound(s), after or during the first separation step.

7. The method according to any one of claims 1 to 6, comprising repeating the first stirring, cooling and separating steps, and in some cases, the first extraction step.

8. The method according to any one of claims 1, 2, 6, 7, wherein the first mixture (104) comprises a second compound among lithium deuteride and lithium tritide, different from the first compound, the method further comprising:
- a second stirring step (120) adapted to stirring the second mixture;
- a second cooling step (122) adapted to cooling, preferably uniformly, the second mixture to a third temperature lower than the second temperature; the second stirring and cooling steps being adapted to deposit at least part of the second compound; and
- a second separation step (130) adapted to separating the deposited second compound from the second mixture, forming a third mixture (128) comprising at least lithium and lithium hydride.

9. The method according to claim 8, further comprising a second extraction step (138) adapted to extracting the second compound, after or during the second separation step (130) .

10. The method according to claim 8 or 9, wherein the second compound is lithium deuteride, and the third temperature is comprised between 687 and 689°C, for example equal to about 688°C.

11. The method according to any one of claims 8 to 10, comprising repeating the second stirring, cooling and separating steps, and in some cases, the second extraction step.

12. The method according to any one of claims 8 to 11, wherein the method further comprises:
- a third stirring step (134) adapted to stirring the third mixture (128);
- a third cooling step (136) adapted to cooling, preferably uniformly, the third mixture to a fourth temperature lower than the third temperature; the third stirring and cooling steps being adapted to deposit at least part of lithium hydride; and
- a third separation step (144) adapted to separating the deposited lithium hydride from the third mixture, forming a fourth mixture (142) comprising at least lithium.

13. The method according to claim 12, further comprising a third extraction step (148) adapted to extracting lithium hydride, after or during the third separation step (144).

14. The method according to claim 12 or 13, wherein the fourth temperature is comprised between 685 and 687°C, for example equal to about 686°C.

15. The method according to any one of claims 12 to 14, comprising repeating the third stirring, cooling and separating steps, and in some cases, the third extraction step.

16. The method according to any one of claims 1 to 15, further comprising a neutron bombardment and/or plasma exposure step (102) applied to the second mixture (118), the third mixture (128), the fourth mixture (142), and/or the fifth mixture (218), for example to recreate a mixture similar to the first mixture (104).

17. The method according to any one of claims 1 to 16, wherein providing the first mixture (104) comprises a heating step (106) adapted to heating the first mixture to the first temperature.

18. The method according to any one of claims 1 to 17, wherein the first mixture (104) is in a liquid or molten form.

19. A device adapted to implement the method of any of claims 1 to 18, wherein the device comprises:
- a container (202) adapted to contain a mixture (204) comprising lithium, lithium hydride and at least one compound among lithium deuteride and/or lithium tritide;
- a stirrer (208) adapted to stirring the mixture in the container;
- a cooling mechanism (210) adapted to cooling the mixture in the container.
